# EUROPÄISCHE PATENTANMELDUNG

(11) **EP 1 030 180 A2**
(43) Veröffentlichungstag der Anmeldung: **23.08.2000**
(21) Anmeldenummer: 99123219.0
(22) Anmeldetag: 25.11.1999
(51) Int. Cl.: G01P 3/481, G01P 3/486, G08C 23/06

(54) **Inkrementaler Drehzahlgeber**

(30) Priorität: 20.02.1999 DE 19907394
(71) Anmelder: Alstom Anlagen und Antriebssysteme GmbH, 12277 Berlin (DE)
(72) Erfinder: Lange, Matthias, 12105 Berlin (DE); Fernahl, Michael, 12161 Berlin (DE)
(74) Vertreter: Dreiss, Fuhlendorf, Steimle & Becker

(57) **Zusammenfassung**

Es wird ein Drehzahlgeber (1) beschrieben, der mit Mitteln zur Erzeugung von mindestens zwei elektrischen Signalen (A, B) versehen ist, die jeweils eine Mehrzahl von Impulsen pro Zeiteinheit in Abhängigkeit von der Drehzahl aufweisen. Erfindungsgemäß sind Mittel zur optischen Übertragung der Impulse vorhanden.

## Beschreibung

Die Erfindung betrifft ein Verfahren zum Betreiben eines Drehzahlgebers, bei dem mindestens zwei elektrische Signale von dem Drehzahlgeber erzeugt werden, die jeweils eine Mehrzahl von Impulsen pro Zeiteinheit in Abhängigkeit von der Drehzahl aufweisen. Die Erfindung betrifft ebenfalls einen Drehzahlgeber mit Mitteln zur Erzeugung von mindestens zwei elektrischen Signalen, die jeweils eine Mehrzahl von Impulsen pro Zeiteinheit in Abhängigkeit von der Drehzahl aufweisen.

Derartige, sogenannte inkrementale Drehzahlgeber sind bekannt. Beispielhaft sind bei einem derartigen Derartige, sogenannte inkrementale Drehzahlgeber sind bekannt. Beispielhaft sind bei einem derartigen Drehzahlgeber zwei kreisförmige Spuren mit voneinander beabstandeten Strichen oder Balken vorhanden. Diese Spuren drehen sich mit der zu erfassenden Drehzahl. Die Striche oder Balken der beiden Spuren besitzen denselben Abstand innerhalb einer Spur, weisen jedoch einen Versatz im Hinblick auf beide Spuren zueinander auf. Damit ist es möglich, mit jeder der beiden Spuren die Drehzahl zu erfassen. Diese ergibt sich aus der Anzahl der Striche oder Balken, die sich in einer bestimmten Zeiteinheit an einem ortsfesten Punkt vorbeibewegt haben. Ebenfalls ist es bei dem bekannten, beschriebenen Drehzahlgeber möglich, die Drehrichtung zu erfassen. Diese ergibt sich aus dem Versatz der Striche bzw. Balken der beiden Spuren zueinander.

Des Weiteren ist es möglich, dass auf einer dritten Spur nur ein einziger Strich oder Balken vorhanden ist. Dieser Strich bzw. Balken kennzeichnet einen sogenannten Nulldurchgang des Drehzahlgebers. Bewegt sich der Strich bzw. Balken an einem ortsfesten Punkt vorbei, so stellt dies den Nulldurchgang des Drehzahlgebers dar.

Bspw. können die drei Spuren des Drehzahlgebers elektromagnetisch abgetastet werden. Daraus entsteht für jede der Spuren ein elektrisches Signal, das aus einer Mehrzahl von aufeinanderfolgenden Impulsen zusammengesetzt ist. Jeder der Impulse entspricht einem Strich bzw. einem Balken. Diese elektrischen Signale werden von dem Drehzahlgeber bspw. zu einer Recheneinheit oder dergleichen übertragen, in der die Signale ausgewertet und weiterverarbeitet werden. Zur Übertragung der elektrischen Signale werden elektrische Kabel, insbesondere Kupferkabel oder dergleichen verwendet. Dabei werden für die elektrischen Signale, die zu den ersten beiden Spuren gehören, mindestens zwei Kupferkabel und ein Nullleiter benötigt. Üblicherweise werden für diese beiden Signale zwei mal zwei Kupferkabel und der Nullleiter verwendet, so dass jedes der beiden Signale im Sinne einer RS485-Schnittstelle auch komplementär vorhanden ist.

Die beschriebene Übertragung der Signale des Drehzahlgebers besitzt den Nachteil, dass eine relativ hohe elektrische Leistung vorhanden sein muss, um die Signale auch über größere Entfernungen von mehreren hundert Metern zu übertragen. Ein weiterer Nachteil dieser Übertragung besteht darin, dass die Impulse auf den Kupferkabeln verformt werden. Diese Verformung ist dabei weitgehend frequenzabhängig, so dass es schwierig ist, die Verformung am Empfangsort wieder zu kompensieren. Schließlich besitzen die Kupferkabel den wesentlichen Nachteil, dass sie gegen elektromagnetische Einkopplungen empfindlich sind. Dies hat zur Folge, dass derartige elektromagnetische Einkopplungen zu Verfälschungen oder gar zu Fehlern in den übertragenen Signalen führen können. Schließlich sind noch die immer höher werdenden Kosten für Kupferkabel als weiterer Nachteil zu nennen.

Aufgabe der Erfindung ist es, einen Drehzahlgeber sowie ein Verfahren zu dessen Betrieb zur Verfügung zu stellen, mit denen eine einfache, sichere und kostengünstige Übertragung der Signale auch über größere Entfernungen möglich ist.

Diese Aufgabe wird bei einem Verfahren der eingangs genannten Art durch die Erfindung dadurch gelöst, dass die Impulse optisch übertragen werden. Bei einem Drehzahlgeber der eingangs genannten Art wird die Aufgabe durch die Erfindung dadurch gelöst, dass Mittel zur optischen Übertragung der Impulse vorhanden sind.

Die Impulse und damit die Signale werden also nicht mehr elektrisch, sondern optisch übertragen. Damit sind die mit der elektrischen Übertragung zusammenhängenden Nachteile bei der Erfindung nicht mehr vorhanden. Insbesondere weist die optische Übertragung nahezu keine Störempfindlichkeit gegenüber elektromagnetischen Einkopplungen oder dergleichen auf. Eine Verfälschung der übertragenen Signale ist damit nicht mehr zu befürchten. Des Weiteren entsteht bei der optischen Übertragung der Impulse keine frequenzabhängige Verformung derselben. Durch die optische Übertragung ist stattdessen gewährleistet, dass die Impulse auch nach der Übertragung über mehrere hundert Meter nahezu unverändert am Empfangsort ankommen. Ein weiterer Vorteil der optischen Übertragung besteht darin, dass üblicherweise eine wesentlich geringere Leistung ausreicht, um die optische Übertragung durchzuführen. Insbesondere ist diese erforderliche Leistung nicht von der zu überwindenden Entfernung abhängig.

Ein weiterer wesentlicher Vorteil der optischen Übertragung besteht darin, dass die zu übertragende Bandbreite größer ist als bei einer elektrischen Übertragung. Die Frequenz der zu übertragenden Signale, also der Abstand der einzelnen Impulse nacheinander, kann damit geringer sein als bei einer elektrischen Übertragung. Dies eröffnet die Möglichkeit, dass auch bei kleinen Drehzahlen mit Hilfe eines entsprechend hochauflösenden Drehzahlgebers, also mit Hilfe von entsprechend nah beabstandeten Strichen bzw. Balken, eine sichere und genaue Erfassung und Übertragung der Drehzahl erreicht werden kann.

Bei einer vorteilhaften Weiterbildung der Erfindung werden die Impulse über einen Lichtwellenleiter oder ein Lichtleiterkabel, insbesondere über ein Glasfaserkabel übertragen. Dabei ist es möglich, dass für jedes der zu übertragenden Signale ein separater Leiter oder ein separates Kabel vorhanden ist. Besonders vorteilhaft ist es jedoch, wenn die beiden zu übertragenden Signale über einen einzigen Lichtwellenleiter oder ein einziges Lichtleiterkabel übertragen werden. Dies bringt eine wesentliche Vereinfachung der gesamten Übertragung sowie eine wesentliche Kostenreduktion mit sich.

Bei einer vorteilhaften Ausgestaltung der Erfindung wird jedes der Signale in einer unterschiedlichen Farbe übertragen. Damit wird auf besonders einfache Weise erreicht, dass die beiden Signale ohne gegenseitige Störungen auf ein- und demselben Lichtleiterkabel übertragen werden können. Die den beiden Spuren des Drehzahlgebers zugeordneten Signale werden also in unterschiedlichen Farben über das Lichtleiterkabel übertragen. Dies stellt eine besonders einfache und kostengünstige Realisierung der Erfindung dar.

Bei einer weiteren vorteilhaften Ausgestaltung der Erfindung werden die elektrischen Signale in optische Signale umgewandelt und in der zugehörigen Farbe ausgesendet. Dabei ist es besonders vorteilhaft, wenn eine Lichtquelle, insbesondere eine lichtemittierende Diode für jedes der beiden Signale vorgesehen ist. Derartige lichtemittierende Dioden sind besonders zuverlässige und gleichzeitig kostengünstige elektrische Bauelemente, die weitere Vorteile im Hinblick auf die Sicherheit und die Kosten der Übertragung mit sich bringen.

Bei einer ersten Alternative ist es besonders vorteilhaft, wenn die Lichtquellen, insbesondere die lichtemittierenden Dioden zur Erzeugung von Licht in unterschiedlichen Farben geeignet sind. Damit wird bereits mit Hilfe der lichtemittierenden Dioden die Möglichkeit der Übertragung von mehreren Signalen über ein- und dasselbe Lichtleiterkabel eröffnet. Die verschiedenen Signale werden den verschiedenen lichtemittierenden Dioden und damit den verschiedenen Farben zugeordnet. Dies stellt eine besonders einfache und trotzdem zweckmäßige und kostengünstige Realisierung der Erfindung dar.

Bei einer zweiten Alternative ist es besonders vorteilhaft, wenn den Lichtquellen, insbesondere den lichtemittierenden Dioden Filter in unterschiedlichen Farben nachgeordnet sind. Auf diese Weise können identische Dioden verwendet werden, deren Licht erst durch die nachgeordneten Filter in unterschiedliche Farben umgesetzt wird.

Bei einer weiteren vorteilhaften Ausgestaltung der Erfindung werden die ausgesendeten optischen Signale empfangen, farbenabhängig getrennt und in elektrische Signale umgewandelt. Die Auftrennung des empfangenen optischen Signals in die verschiedenen Farben kann besonders einfach mit Hilfe von entsprechenden Filtern erreicht werden. Diesen Filtern können dann Fotozellen nachgeordnet sein, mit denen die optischen Signale in elektrische Signale umgewandelt werden. Alternativ ist es möglich, dass jede der Fotozellen zur Erkennung einer bestimmten, unterschiedlichen Farbe geeignet ist. In diesem Fall sind dann nur Fotozellen unterschiedlicher Farbe erforderlich, jedoch keine Filter.

Eine weitere Möglichkeit besteht darin, dass eine Mehrfach-Lichtquelle und/oder ein Mehrfach-Empfänger verwendet werden.

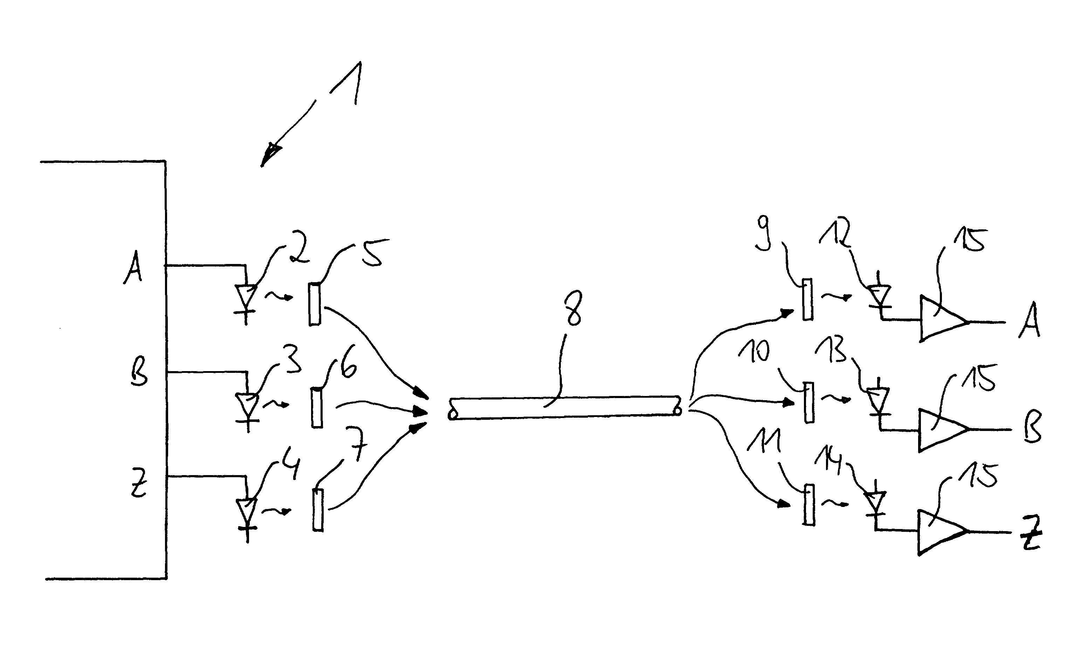

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Schaltbild eines Ausführungsbeispiels eines erfindungsgemäßen Drehzahlgebers sowie dessen erfindungsgemäße Betriebsweise.

In der Figur ist ein Drehzahlgeber 1 dargestellt, bei dem es sich um einen sogenannten inkrementalen Drehzahlgeber handelt. Der Drehzahlgeber 1 weist in nicht dargestellter Weise eine Scheibe auf, die mit der zu erfassenden Drehzahl rotiert. Auf der Scheibe sind zwei kreisförmige Spuren aufgetragen, die aus einer Vielzahl von Strichen bestehen, wobei die Striche in jeder der Spuren einen gleichen Abstand zueinander aufweisen. Die Anzahl der Striche pro Spur ist damit gleich. Die Striche der Spuren sind jedoch im Hinblick auf die beiden Spuren zueinander versetzt. Der Versatz ist nicht symmetrisch, sondern asymmetrisch gewählt.

Den beiden Spuren ist jeweils ein ortsfester Aufnehmer zugeordnet. Der Aufnehmer kann elektromagnetisch oder optisch ausgebildet sein. Bewegen sich die Spuren an dem jeweils zugehörigen Aufnehmer vorbei, so wird von dem Aufnehmer ein elektrisches Signal erzeugt. In der Figur sind die zu den beiden beschriebenen Spuren zugehörigen Signale als elektrisches Signal A und elektrisches Signal B gekennzeichnet.

Aufgrund ihrer Erzeugung weisen die Signale A und B bei einer Drehbewegung der Scheibe eine Vielzahl von aufeinanderfolgenden Impulsen auf. Jeder der Impulse ist dabei einem der Striche der beiden Spuren zugeordnet. Die Anzahl der Impulse pro Zeiteinheit entspricht der Drehzahl der Scheibe. Damit ist es möglich, aus jeder der beiden Spuren die zu erfassende Drehzahl zu ermitteln.

Ebenfalls ist es möglich, durch einen Vergleich der beiden Spuren miteinander, insbesondere durch einen Vergleich einander zugehörigen Impulse der beiden Spuren miteinander, den Versatz dieser Impulse zu ermitteln. Aus dem Versatz kann dann auf die Drehrichtung der Scheibe, also auf einen möglichen Linkslauf oder einen möglichen Rechtslauf der Scheibe geschlossen werden.

Des Weiteren ist auf der Scheibe eine dritte Spur vorhanden, die nur einen einzigen Strich aufweist. Der dritten Spur ist ein weiterer Aufnehmer zugeordnet, der ein Signal erzeugt, das in der Figur als elektrisches Signal Z gekennzeichnet ist. Das Signal Z stellt den Nulldurchgang der Scheibe und damit den Nulldurchgang des Drehzahlgebers dar.

Die elektrischen Signale A, B und ggf. Z werden jeweils einer lichtemittierenden Diode 2, 3, 4 zugeführt. Anstelle der lichtemittierenden Dioden 2, 3, 4 können auch jegliche andere Lichtquellen verwendet werden. Von diesen lichtemittierenden Dioden 2, 3, 4 werden die elektrischen Signale A, B und Z in optische Signale umgewandelt.

Den lichtemittierenden Dioden 2, 3, 4 sind Filter 5, 6, 7 nachgeordnet. Jeder Diode 2, 3, 4 ist dabei ein Filter 5, 6, 7 zugeordnet. Die Filter 5, 6, 7 sind dazu geeignet, bestimmte Farben zu erzeugen. Die von den Filtern 5, 6, 7 erzeugten Farben sind unterschiedlich. Nach den Filtern 5, 6, 7 stehen damit optische Signale zur Verfügung, die im Hinblick auf ihre Impulsfolgen den Signalen A, B, Z entsprechen, die aber unterschiedliche Farben aufweisen.

Diese optischen Signale A, B und Z werden in ein Glasfaserkabel 8 eingespeist. Anstelle des Glasfaserkabels 8 kann auch jeglicher andere Lichtwellenleiter oder jegliches andere Lichtleiterkabel verwendet werden. Die optischen Signale A, B und Z werden damit über das Glasfaserkabel 8 übertragen.

Am anderen Ende des Glasfaserkabels 8 sind Filter 9, 10, 11 vorhanden, die dazu geeignet sind, bestimmte Farben aus dem über das Glasfaserkabel 8 übertragenen optischen Signal auszukoppeln. Die Farben der Filter 9, 10, 11 entsprechen dabei den Farben der Filter 5, 6, 7. Nach den Filtern 9, 10, 11 stehen damit wieder die optischen Signale A, B und Z zur Verfügung, die eingangs in das Glasfaserkabel 8 eingekoppelt worden sind.

Diese optischen Signale A, B und Z beaufschlagen drei Fotozellen 12, 13, 14. Von diesen Fotozellen 12, 13, 14 werden die optischen Signale A, B und Z wieder in elektrische Signale A, B und Z umgewandelt. Die einzelnen elektrischen Signale A, B und Z können von einem der jeweiligen Fotozelle 12, 13, 14 nachgeschalteten Verstärker 15 verstärkt werden.

Insgesamt werden damit die beiden elektrischen Signale A und B sowie ggf. das elektrische Signal Z des Drehzahlgebers 1 in optische Signale umgewandelt und optisch in unterschiedlichen Farben übertragen. Die Übertragung erfolgt über ein Glasfaserkabel. Am Empfangsort werden die optischen Signale wieder in die elektrischen Signale A und B sowie ggf. das elektrische Signal Z zurückgewandelt.

Alternativ ist es möglich, dass bspw. anstelle der lichtemittierenden Diode 2 und dem nachgeordneten Filter 5, die beide dem Signal A zugeordnet sind, eine einzige lichtemittierende Diode vorhanden ist, die dazu geeignet ist, nur eine bestimmte Farbe auszusenden. Entsprechende farbabhängige lichtemittierende Dioden sind dann auch bei der Umwandlung der Signale B und Z vorhanden. Die Farben der verschiedenen lichtemittierenden Dioden sind unterschiedlich.

Ebenfalls ist es möglich, dass eine Mehrfach-Lichtquelle verwendet wird, die dazu geeignet ist, mehrere Farben zu erzeugen. Eine derartige Mehrfach-Lichtquelle hat den Vorteil, dass die erzeugten optischen Signale einfach in das Glasfaserkabel eingekoppelt werden können. Entsprechend besteht die Möglichkeit, einen Mehrfach-Empfänger zu verwenden.

In ähnlicher Weise ist es möglich, dass das Filter 9 und der Fotosensor 12, die beide dem Signal A zugeordnet sind, als eine farbabhängige Fotozelle vorhanden sind. Entsprechendes gilt dann auch für die Filter und die Fotozellen, die den Signalen B und C am Empfangsort zugeordnet sind. Die Fotozellen sind dabei von unterschiedlichen Farben abhängig, wobei diese Farben den Farben am Drehzahlgeber 1 entsprechen.

Wie erwähnt ist es möglich, die Signale A, B und ggf. Z optisch zu erzeugen. Zu diesem Zweck können Lichtstrahlen in dem Drehzahlgeber 1 erzeugt werden, die auf die Spuren gerichtet sind. Bei einer Rotation der mit den Spuren versehenen Scheibe werden diese Lichtstrahlen unterbrochen. Die Unterbrechungen entsprechen den Impulsen der Signale A, B und ggf. Z. Damit ist es möglich, diese, von den Spuren unterbrochenen Lichtstrahlen über entsprechende Farbfilter zu leiten, um sie dann unmittelbar über Glasfaserkabel 8 zu übertragen. Eine Umwandlung in elektrische Signale wird damit vermieden.

## Patentansprüche

1. Verfahren zum Betreiben eines Drehzahlgebers (1), bei dem mindestens zwei elektrische Signale (A, B) von dem Drehzahlgeber (1) erzeugt werden, die jeweils eine Mehrzahl von Impulsen pro Zeiteinheit in Abhängigkeit von der Drehzahl aufweisen, **dadurch gekennzeichnet**, dass die Impulse optisch übertragen werden.

2. Verfahren nach Anspruch 1, dadurch gekennzeichnet, dass die Impulse über einen Lichtwellenleiter oder ein Lichtleiterkabel, insbesondere über ein Glasfaserkabel (8) übertragen werden.

3. Verfahren nach einem der Ansprüche 1 oder 2, dadurch gekennzeichnet, dass jedes der Signale (A, B) in einer unterschiedlichen Farbe übertragen wird.

4. Verfahren nach Anspruch 3, dadurch gekennzeichnet, dass die elektrischen Signale (A, B) in optische Signale umgewandelt und in der zugehörigen Farbe ausgesendet werden.

5. Verfahren nach Anspruch 4, dadurch gekennzeichnet, dass die ausgesendeten optischen Signale (A, B) empfangen, farbenabhängig getrennt und in elektrische Signale (A, B) umgewandelt werden.

6. Drehzahlgeber (1) mit Mitteln zur Erzeugung von mindestens zwei elektrischen Signalen (A, B), die jeweils eine Mehrzahl von Impulsen pro Zeiteinheit in Abhängigkeit von der Drehzahl aufweisen, dadurch gekennzeichnet, dass Mittel zur optischen Übertragung der Impulse vorhanden sind.

7. Drehzahlgeber (1) nach Anspruch 6, dadurch gekennzeichnet, dass zur Übertragung ein Lichtwellenleiter oder ein Lichtleiterkabel, insbesondere ein Glasfaserkabel (8) vorgesehen ist.

8. Drehzahlgeber (1) nach einem der Ansprüche 6 oder 7, dadurch gekennzeichnet, dass eine Lichtquelle, insbesondere eine lichtemittierende Diode (2, 3) für jedes der beiden Signale (A, B) vorgesehen ist.

9. Drehzahlgeber (1) nach Anspruch 8, dadurch gekennzeichnet, dass die Lichtquellen, insbesondere die lichtemittierenden Dioden (2, 3) zur Erzeugung von Licht in unterschiedlichen Farben geeignet sind.

10. Drehzahlgeber (1) nach Anspruch 8, dadurch gekennzeichnet, dass den Lichtquellen, insbesondere den lichtemmitierenden Dioden (2, 3) Filter (5, 6) in unterschiedlichen Farben nachgeordnet sind.
